(19) Europäisches Patentamt
European Patent Office
Office européen des brevets

(11) EP 2 486 070 B1

(12) FASCICULE DE BREVET EUROPEEN

(45) Date de publication et mention de la délivrance du brevet:
**17.05.2017 Bulletin 2017/20**

(21) Numéro de dépôt: **10762932.1**

(22) Date de dépôt: **08.10.2010**

(51) Int Cl.:
***C08F 283/00*** *(2006.01)* ***C08J 3/28*** *(2006.01)*
***C08L 63/10*** *(2006.01)* ***C08L 81/06*** *(2006.01)*
***C09J 4/06*** *(2006.01)* ***C09J 163/10*** *(2006.01)*
***C09J 181/06*** *(2006.01)*

(86) Numéro de dépôt international:
**PCT/EP2010/065137**

(87) Numéro de publication internationale:
**WO 2011/042554 (14.04.2011 Gazette 2011/15)**

# (54) AUGMENTATION DE LA TENACITE D'UN MATERIAU OBTENU A PARTIR D'UNE COMPOSITION DURCISSABLE COMPRENANT AU MOINS UN MONOMERE VINYLESTER

ERHÖHUNG DER FESTIGKEIT EINES MATERIALS DURCH EINE HÄRTBARE ZUSAMMENSETZUNG MIT MINDESTENS EINEM VINYLESTERMONOMER

INCREASE IN THE TOUGHNESS OF A MATERIAL ACHIEVED BY MEANS OF A CURABLE COMPOSITION INCLUDING AT LEAST ONE VINYL ESTER MONOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2009 FR 0957090**

(43) Date de publication de la demande:
**15.08.2012 Bulletin 2012/33**

(73) Titulaires:
- **Airbus Safran Launchers SAS**
  **75015 Paris (FR)**
- **Université De Reims Champagne-Ardenne**
  **51097 Reims (FR)**
- **Centre National de la Recherche Scientifique**
  **75016 Paris (FR)**

(72) Inventeurs:
- **KRZEMINSKI, Mickael**
  **F-51530 Dizy (FR)**
- **DEFOORT, Brigitte**
  **F-33160 Saint Medard En Jalles (FR)**
- **COQUERET, Xavier**
  **F-51100 Reims (FR)**

(74) Mandataire: **Ilgart, Jean-Christophe et al**
**BREVALEX**
**95, rue d'Amsterdam**
**75378 Paris Cedex 8 (FR)**

(56) Documents cités:
**EP-A1- 1 473 325** **US-A1- 2002 147 283**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 486 070 B1

## Description

### DOMAINE TECHNIQUE

La présente invention se rapporte à un procédé pour augmenter la ténacité d'un matériau obtenu par durcissement d'une composition comprenant au moins un monomère vinylester.

Elle se rapporte aussi à une composition durcissable qui comprend au moins un monomère vinylester et qui permet de réaliser des matériaux à très haute ténacité.

Elle se rapporte encore à un matériau obtenu par durcissement de cette composition.

Ce matériau peut notamment être un matériau formant la matrice d'un matériau composite ou un matériau adhésif assurant l'assemblage de pièces entre elles et, en particulier, de pièces en matériau(x) composite(s).

L'invention est donc susceptible de trouver des applications dans toutes sortes d'industrie et, plus spécialement, dans les industries aéronautique, spatiale, ferroviaire, navale et automobile, par exemple pour la fabrication et l'assemblage de pièces de structure, de pièces de moteur, de pièces d'habitacle ou de pièces de carrosserie, dans l'industrie de l'armement, par exemple pour la fabrication et l'assemblage de missiles ou de tubes lance-missiles, ou encore dans le domaine des loisirs et des sports, par exemple pour la fabrication et l'assemblage d'articles destinés aux sports nautiques et aux sports de glisse.

### ÉTAT DE LA TECHNIQUE ANTÉRIEURE

Les matériaux composites permettent d'exploiter les propriétés mécaniques exceptionnelles de certains matériaux que l'on ne sait pas fabriquer sous forme massive, mais seulement sous forme de filaments. On utilise alors des matrices à base de polymères organiques pour lier les filaments entre eux. Mais, si l'on veut obtenir des matériaux composites à hautes performances, il est indispensable que les matrices aient elles-mêmes de bonnes propriétés mécaniques.

Or, d'une façon générale, les matrices obtenues à partir de résines dites « *thermo-durcissables* » (par opposition aux résines dites *« thermoplastiques »*) telles que les résines époxydes et vinylesters, présentent un allongement à la rupture et une résistance au choc médiocre.

On sait de longue date que la ténacité (ou *« fracture toughness »* en anglais) d'un matériau, c'est-à-dire son aptitude à s'opposer à la propagation brutale de fissures, peut être améliorée en y incorporant des particules de faibles dimensions. En effet, lorsqu'une fissure se forme dans le matériau, la propagation de cette fissure est ralentie par les particules qui agissent comme des obstacles. Des mécanismes de déformation plastique et, notamment, les phénomènes de cavitation et de bandes de cisaillement assurent alors un renforcement du matériau.

L'idée généralement considérée pour pallier la faible ténacité des matrices obtenues à partir de résines thermodurcissables est donc d'incorporer dans ces résines un polymère thermoplastique dont le rôle est de concentrer les contraintes et de réguler l'énergie dégagée lors d'un impact ou d'une fissuration des matrices.

Typiquement, cette incorporation s'effectue en deux étapes: une première étape qui consiste à dissoudre le polymère thermoplastique dans la résine thermodurcissable jusqu'à l'obtention d'un mélange homogène, et une deuxième étape qui consiste à faire durcir le mélange ainsi obtenu par polymérisation/ réticulation à chaud de la résine. Il se produit alors une démixtion, c'est-à-dire une séparation de phases, qui conduit à la formation de nodules de thermoplastique au sein de la résine durcie.

Dans le cas de matrices à base de résines époxydes polymérisables/réticulables à chaud, il est courant d'utiliser comme polymère thermoplastique, un polymère de la famille des polyéthersulfones (ou PES) qui sont des polymères amorphes possédant une température de transition vitreuse élevée, typiquement supérieure à 200°C. Un exemple d'une telle utilisation est décrit dans le brevet US délivré sous le n° 5,434,226 (référence **[1]**).

Par contre, il est connu que les polyéthersulfones ne peuvent pas être utilisés pour augmenter la ténacité de matrices à base de résines vinylesters, les tentatives d'incorporation d'un polyéthersulfone dans une résine vinylester s'étant, en effet, soldées par des échecs en raison de la non-miscibilité de ces deux types de composés (Wang S. et al., Journal of Polymer Science Part B: Polymer Physics, 2000, 38, 2409-2421 (référence **[2]**) ; Liang, G. et al., Journal of Materials Science, 2005, 40, 2089-2091 (référence **[3]**).

Il a, de ce fait, été proposé, dans la demande de brevet européen publiée sous le n° 1 473 325 (référence **[4]**), d'augmenter la ténacité d'une matrice à base d'une résine vinylester en mélangeant cette résine à un copolymère d'arylène éther diphénylsulfone et d'arylène éther triphénylphosphine (ou BPA-Px) puis, après démixtion du mélange résultant, en polymérisant/ réticulant la résine à froid, c'est-à-dire en l'absence de tout chauffage.

Il se trouve que cette solution est très efficace puisqu'elle conduit à des gains en ténacité au moins égaux à 60% et pouvant atteindre 88% et ce, sans que les autres propriétés de la matrice, qui sont inhérentes à l'utilisation d'une résine vinylester, ne soient altérées.

Toutefois, elle n'est pas totalement satisfaisante dans la mesure où, d'une part, elle ne peut s'appliquer qu'à

des résines vinylesters aptes à polymériser/réticuler à des températures inférieures à 70°C et, d'autre part, les copolymères BPA-Px sont des produits relativement chers.

Les Inventeurs se sont donc fixé pour but de trouver une autre solution au problème de la faible ténacité que présentent les matrices obtenues à partir de résines vinylesters, qui soit, elle, applicable aussi bien à des résines vinylesters dont la polymérisation/réticulation ne peut être effectuée qu'à chaud qu'à des résines vinylesters polymérisables/ réticulables à froid et qui soit moins coûteuse que celle préconisée dans la référence **[4]** précitée.

Or, il se trouve que, dans le cadre de leurs travaux, les Inventeurs ont constaté que, non seulement il est possible de rendre miscibles une résine vinylester et un polymère thermoplastique du type polyéthersulfone en utilisant un diluant réactif dans lequel ils sont tous les deux solubles mais que, de plus, l'utilisation conjointe d'un tel polymère et d'un tel diluant se traduit par des gains en ténacité encore plus élevés que ceux obtenus avec un copolymère BPA-Px.

Et c'est sur ces constatations qu'est basée la présente invention.

## EXPOSÉ DE L'INVENTION

L'invention a donc, en premier lieu, pour objet un procédé pour augmenter la ténacité d'un matériau obtenu par durcissement d'une composition comprenant au moins un monomère vinylester, lequel procédé comprend l'incorporation dans cette composition d'un polymère thermoplastique polyaromatique sulfoné, cette incorporation étant réalisée par dissolution du monomère vinylester et du polymère thermoplastique dans un diluant réactif dans lequel ils sont tous les deux solubles, le diluant réactif étant un *N*-vinyl lactame.

Dans ce qui précède et ce qui suit, on entend par « *monomère vinylester* », une molécule qui est capable de subir une réaction de polymérisation/ réticulation grâce à la présence d'au moins deux sites réactifs de formule : $-O-CO-CR=CH_2$ dans laquelle R représente un atome d'hydrogène ou un groupe méthyle, et ce, que ce soit sous l'effet de la chaleur, de la lumière (lumière visible, UV ou IR), d'un rayonnement ionisant (faisceau d'électrons, rayonnement $\beta$ ou $\gamma$, rayons X, ...), d'une réaction d'oxydo-réduction ou de tout autre moyen et qui comprend un motif bisphénolique A et/ou un motif novolaque. Cette molécule est donc, de préférence, choisie parmi :

- les monomères vinylesters de bisphénol A comme, par exemple, ceux commercialisés par la société SARTOMER sous la référence SR 601E et par la société CYTEC sous la référence Ebecryl™ 600 ;
- les monomères vinylesters de bisphénol A halogénés comme, par exemple, ceux commercialisés par la société DOW Chemicals sous les références Derakane DER 510A-40 et 510C-350 ;
- les monomères vinylesters novolaques comme, par exemple, celui commercialisé par la société CYTEC sous la référence Ebecryl™ 609 ; et
- les monomères vinylesters mixtes, comprenant à la fois des motifs bis-phénoliques A et des motifs novolaques, comme, par exemple, celui commercialisé par la société DSM Composite Resins sous la référence Atlac™ 430.

Par ailleurs, on entend par « *diluant réactif* », un composé qui est capable de jouer à la fois le rôle de solvant vis-à-vis d'un monomère vinylester et celui de co-monomère dans la réaction de polymérisation/réticulation de ce monomère grâce à la présence d'au moins un site réactif qu'il comporte, étant entendu que, dans le cadre de la présente invention, le monomère en question est un monomère vinylester.

Conformément à l'invention, le diluant réactif est un *N*-vinyl lactame et, plus spécialement, la *N*-vinyl-2-pyrrolidone, la *N*-vinyl-2-pipéridone ou le *N*-vinyl-caprolactame.

Toutefois, tout autre composé dans lequel le monomère vinylester et le polymère thermoplastique sont solubles et qui est de plus capable de réagir avec les sites réactifs du monomère vinylester est également susceptible de convenir.

A cet égard, on considère, dans le cadre de la présente invention, que le monomère vinylester et le polymère thermoplastique sont solubles dans un diluant réactif à une température donnée dès lors que le diagramme de phases du mélange de ces trois composés à cette température comporte un domaine liquide monophasé qui est le domaine de solubilité.

Par ailleurs, le polymère thermoplastique est avantageusement choisi parmi les polymères qui ne sont constitués que de monomères sulfonés, c'est-à-dire de monomères comprenant au moins un groupe sulfone ($-SO_2-$), et en particulier parmi les polysulfones, les polyéthersulfones et les polyphénylsulfones comme, par exemple, ceux commercialisés par la société SOLVAY Advanced Polymers, respectivement sous les références Udel™ (pour les polysulfones), Veradel™ et Virantage™ (pour les polyéthersulfones) et Radel™ (pour les polyphénylsulfones).

Parmi ces polymères, les polyéthersulfones sont particulièrement préférés.

Avantageusement, la composition comprend pour 100 parties en masse de monomère vinylester :

- de 14 à 400 parties en masse de polymère thermoplastique, et
- de 40 à 500 parties en masse de diluant réactif.

Mieux encore, la composition comprend pour 100 parties en masse de monomère vinylester :

- de 30 à 50 parties en masse de polymère thermoplastique, et
- de 65 à 100 parties en masse de diluant réactif.

Conformément à l'invention, le procédé comprend de préférence :

a) la dissolution du polymère thermoplastique dans le diluant réactif, puis
b) la dissolution du monomère vinylester dans la solution obtenue à l'étape a).

Chacune de ces dissolutions peut être réalisée sous agitation mécanique, à température ambiante ou à une température supérieure à la température ambiante.

La composition peut, bien entendu, comprendre, en plus du monomère vinylester, du polymère thermoplastique et du diluant réactif, un ou plusieurs adjuvants qui sont choisis en fonction du mode de mise en oeuvre de cette composition et, notamment, de la manière dont on souhaite réaliser son durcissement ainsi que des propriétés que l'on souhaite conférer au matériau qu'elle est destinée à fabriquer.

Ainsi, par exemple, ce ou ces adjuvants peuvent être choisis parmi les amorceurs (ou initiateurs) latents de polymérisation/réticulation dans le cas où le durcissement de la composition est prévu pour être réalisé par voie thermique, par voie photochimique ou par réaction d'oxydo-réduction, les accélérateurs de polymérisation/réticulation, les inhibiteurs de polymérisation/réticulation, les antioxydants, les flexibilisants, les plastifiants, les agents anti-UV, les agents ignifugeants, les agents compatibilisants, les agents anti-retrait et les charges, tous ces adjuvants et les conditions dans lesquelles ils peuvent être utilisés dans le cas de monomères vinylesters étant bien connus de l'homme du métier. Sur ce point, le lecteur pourra se référer à des ouvrages de référence tels que les « TECHNIQUES DE l'INGENIEUR », volumes « Plastiques et Composites ».

Lorsqu'un tel ou de tels adjuvants sont utilisés, ceux-ci peuvent être ajoutés à l'une quelconque des étapes a) et b) précédemment citées ou même après l'étape b), c'est-à-dire après la dissolution du monomère vinylester obtenue, à moins qu'ils ne soient déjà prémélangés à ce monomère, de nombreux monomères vinylesters étant, en effet, disponibles dans le commerce sous forme de formulations dans lesquelles ils sont déjà associés à un ou plusieurs adjuvants.

Conformément à l'invention, le durcissement de la composition peut être réalisé par tout moyen susceptible d'induire la polymérisation/réticulation du monomère vinylester et, notamment, par application d'un traitement thermique, d'un traitement lumineux ou d'un rayonnement ionisant.

A la connaissance des Inventeurs, des compositions durcissables comprenant à la fois un monomère vinylester, un polymère thermoplastique polyaromatique sulfoné et un *N*-vinyl lactame comme diluant réactif, n'auraient jamais été proposées dans l'état de la technique.

L'invention a donc également pour objet une composition durcissable, qui comprend au moins un monomère vinylester, un polymère thermoplastique polyaromatique sulfoné et un diluant réactif *N*-vinyl lactame.

Pour cette composition, on préfère comme précédemment :

- choisir le monomère vinylester parmi les monomères vinylesters de bisphénol A, les monomères vinylesters de bisphénol A halogénés, les monomères vinylesters novolaques et les monomères vinylesters comprenant à la fois des motifs bis-phénoliques A et des motifs novolaques ;
- choisir le polymère thermoplastique parmi les polysulfones, les polyéthersulfones et les polyphénylsulfones ; et
- choisir le *N*-vinyl lactame parmi la *N*-vinyl-2-pyrrolidone, la *N*-vinyl-2-pipéridone et le *N*-vinyl-caprolactame.

Par ailleurs, on préfère qu'elle comprenne pour 100 parties en masse de monomère vinylester :

- de 14 à 400 parties en masse et, mieux encore, de 40 à 500 parties en masse de polymère thermoplastique, et
- de 30 à 50 parties en masse et, mieux encore, de 65 à 100 parties en masse de diluant réactif.

Comme précédemment, la composition peut comprendre de plus un ou plusieurs adjuvants tels que ceux précédemment mentionnés.

Bien que, conformément à l'invention, la composition puisse aussi bien être une composition durcissable par voie thermique qu'une composition durcissable par voie photochimique ou par ionisation, on préfère toutefois que cette composition soit durcissable sous l'effet d'un rayonnement lumineux (lumière visible, UV ou IR) ou ionisant (faisceau d'électrons, rayonnement $\beta$ ou $\gamma$, rayons X, ...) .

En effet, l'utilisation de compositions durcissables sous l'effet d'un rayonnement lumineux ou ionisant présente un certain nombre d'avantages par rapport à celle de compositions durcissables par la chaleur, ces avantages étant notamment liés à la possibilité, d'une part, de travailler sans autoclave, ce qui est particulièrement appréciable dans le

cas de la fabrication et de l'assemblage de pièces de grandes dimensions, et, d'autre part, d'obtenir des vitesses de durcissement plus élevées, ce qui permet des cadences de production supérieures pour des coûts inférieurs.

Le monomère vinylester est donc, de préférence, choisi en conséquence.

La composition conforme à l'invention s'est révélée conduire, après durcissement, à des matériaux qui présentent une ténacité particulièrement élevée - cette ténacité, telle que déterminée par la norme ISO 13586:2000, étant, en effet, au moins égale à 1,7 $MPa.m^{1/2}$ et pouvant même être supérieure à 2 $MPa.m^{1/2}$ - conjuguée à une température de transition vitreuse qui est également élevée, ce qui rend l'utilisation de cette composition dans le domaine de la fabrication et de l'assemblage de matériaux composites, notamment à usage aéronautique ou spatial, particulièrement intéressante.

Aussi l'invention a-t-elle encore pour objet un matériau qui est obtenu par durcissement d'une composition durcissable telle que précédemment définie.

Conformément à l'invention, ce matériau est, de préférence, soit un adhésif assurant l'assemblage de pièces entre elles et, en particulier, de pièces en matériau(x) composite(s), soit un matériau formant la matrice d'un matériau composite.

Le renfort présent dans ce matériau composite peut être de différents types. Ainsi, il peut notamment s'agir d'un renfort constitué de fibres de verre, de fibres de quartz, de fibres de carbone, de fibres de graphite, de fibres de silice, de fibres métalliques comme des fibres d'acier, des fibres d'aluminium ou des fibres de bore, de fibres organiques comme les fibres d'aramide, les fibres de polyéthylène, les fibres de polyester ou les fibres de poly(p-phénylène benzobisoxazole), plus connues sous le sigle PBO, ou encore de fibres de carbure de silicium.

Ce renfort peut se présenter, selon la nature des fibres qui le constituent, sous la forme de fils coupés, de fibres broyées, de mats à filaments continus, de mats à filaments coupés, de stratifils (ou « rovings » en langue anglaise), de tissus, de tricots, de feutres, ..., ou encore sous la forme de complexes réalisés par association de différents types de matériaux plans.

Par ailleurs, la fabrication du matériau composite peut être réalisée par toutes les techniques connues de l'homme du métier des matériaux composites comme, par exemple, par imprégnation, moulage par injection simultanée, moulage par drapage autoclavé, moulage sous vide, moulage par injection basse pression de résine (ou RTM pour « *Resin Transfert Molding »),* moulage à la presse à froid *"voie humide"* basse pression, moulage par injection de compound (ou BMC pour *« Bulk Molding Compound* »), moulage par compression de mats préimprégnés (ou SMC pour « *Sheet Molding Compound* »), par enroulement filamentaire, par centrifugation ou encore par pultrusion.

D'autres caractéristiques et avantages de l'invention apparaîtront à la lecture du complément de description qui suit, qui se rapporte à un exemple de préparation de compositions durcissables et de matériaux conformes à l'invention ainsi que de démonstration des propriétés des matériaux ainsi préparés.

Il va de soi que cet exemple n'est donné qu'à titre d'illustration de l'objet de l'invention et ne vise en aucun cas à limiter cet objet.

## BRÈVE DESCRIPTION DES DESSINS

La figure 1 illustre schématiquement une éprouvette, vue de dessus (partie A) et vue de côté (partie B), telle qu'utilisée dans les tests de ténacité réalisés sur des matériaux conformes à l'invention conformément à la norme ISO 13586:2000.

La figure 2 illustre schématiquement le montage, vu de dessus (partie A) et vu en coupe transversale (partie B), tel qu'utilisé sur une machine d'essai INSTRON™ 4400R dans les tests de ténacité réalisés sur des matériaux conformes à l'invention conformément à la norme ISO 13586:2000.

## EXPOSÉ DÉTAILLÉ DE MODES DE RÉALISATION PARTICULIERS

L'exemple qui suit illustre la préparation de compositions et de matériaux conformes à l'invention ainsi que les propriétés des matériaux ainsi préparés.

### 1. Préparation des compositions :

Trois compositions conformes à l'invention, dénommées ci-après respectivement compositions **1, 2** et **3,** sont préparées en utilisant :

pour la composition **1** :

- 40 parties en masse d'une résine vinylester ayant pour monomère un diacrylate de bisphénol A éthoxylé, de formule ci-après :

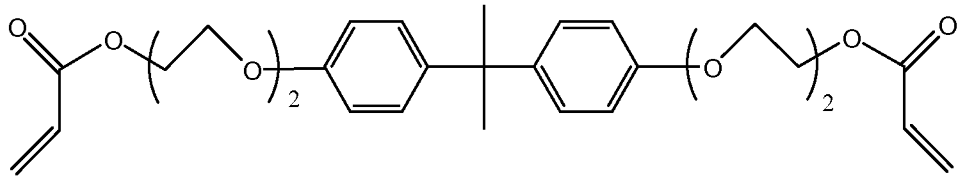

cette résine étant commercialisée par la société SARTOMER sous la référence SR 601E ;
- 20 parties en masse du polyéthersulfone (ou PES) commercialisé par la société SOLVAY Advanced Polymers sous la référence Virantage™ VW-10700 RFP ; et
- 40 parties en masse de *N*-vinylpyrrolidone (ou NVP) ;

pour la composition **2** :

- 25 parties en masse de la même résine que celle utilisée pour la composition **1** ;
- 25 parties en masse du PES commercialisé par la société SOLVAY Advanced Polymers sous la référence Virantage™ VW-10200 RFP, de poids moléculaire plus élevé que celui du PES utilisé pour la composition **1** ; et
- 50 parties en masse de NVP ;

pour la composition **3** :

- 50 parties en masse d'une résine vinylester ayant pour monomère un diacrylate de bisphénol A époxydé, de formule ci-après :

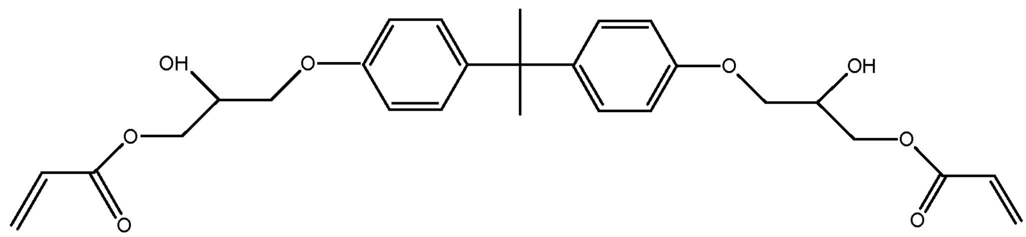

cette résine étant commercialisée par la société CYTEC sous la référence Ebecryl™ 600 ;
- 16,7 parties en masse du même PES que celui utilisé pour la composition **1** ; et
- 33,3 parties en masse de NVP.

Les compositions sont préparées en dissolvant tout d'abord le polyéthersulfone dans la *N*-vinylpyrrolidone sous agitation mécanique constante et à chaud. Pour ce faire, cette dissolution est réalisée dans un réacteur qui est immergé dans un bain d'huile maintenu à 70°C.

Puis, la solution ainsi obtenue est ramenée à la température ambiante. On y ajoute alors la résine vinylester et l'ensemble est chauffé à 50°C dans une étuve, pendant une heure et sous agitation mécanique, pour obtenir un mélange homogène.

Le tableau I ci-après présente les valeurs de viscosité dynamique η, exprimées en Pa.s, telles que déterminées, au moyen d'un viscosimètre à rotation AR 2000.ex de TA Instruments, pour les compositions **1** et **2,** respectivement à 25°C et 50°C et pour deux gradients de vitesse différents : 0,1 et 10 $s^{-1}$.

Tableau I

| **T (°C)** | **Gradient de vitesse ($s^{-1}$)** | η **(Pa.s)** | |
|---|---|---|---|
| | | Composition **1** | Composition **2** |
| 25 | 0,1 | 2,80 | 47,49 |
| | 10 | 8,40 | 39,00 |

(suite)

| T (°C) | Gradient de vitesse ($s^{-1}$) | η (Pa.s) | |
|---|---|---|---|
| | | Composition **1** | Composition **2** |
| 50 | 0,1 | 0,85 | 9,40 |
| | 10 | 1,73 | 8,50 |

Ce tableau montre que les compositions conformes à l'invention peuvent présenter des viscosités très différentes en fonction, d'une part, du choix du monomère vinylester et du PES qui les constituent et, d'autre part, de leurs teneurs en monomère vinylester, PES et NVP, et qu'il est donc possible de jouer sur ces différents paramètres pour ajuster la viscosité d'une composition conforme à l'invention aux spécifications imposées par l'usage et le mode de mise en oeuvre auxquels elle est destinée.

**2. Préparation des matériaux :**

Les compositions **1, 2** et **3** sont coulées dans des moules en acier mesurant 200 mm de côté et 5 mm de hauteur, dégazées sous vide pour éliminer l'air emprisonné lors de la coulée puis polymérisées/ réticulées par ionisation sous faisceau d'électrons à des doses de 80 kGy par 1 passage de 5 kGy suivi de 3 passages de 25 kGy.

**3. Propriétés des matériaux obtenus :**

Les matériaux sont soumis à des essais pour déterminer leur ténacité et leur température de transition vitreuse.

Ténacité :

La ténacité (ou facteur d'intensité de contrainte), notée $K_{IC}$, des matériaux est déterminée par des essais que l'on réalise conformément à la norme ISO 13586:2000 qui fixe les modalités des essais de ténacité des matériaux plastiques suivant le mode d'ouverture de la fissure (mode I).

Cette norme prévoyant deux types d'essais, à savoir des essais de flexion trois points et des essais de traction sur éprouvettes compactes, les tests de ténacité sont réalisés par des essais de flexion trois points en raison d'une plus grande facilité d'usinage des éprouvettes.

Les éprouvettes soumises aux essais de flexion trois points ou éprouvettes de flexion à entaille latérale (SENB pour « *Single Edge Notch Bending* ») sont préparées conformément à la figure 1 qui représente schématiquement une éprouvette vue de dessus (partie A) et vue de côté (partie B). Dans cette figure :

- *w* représente la largeur de l'éprouvette,
- *l* représente sa longueur hors tout,
- *h* représente son épaisseur, tandis que
- *a* représente la longueur de la fissure (entaille + préfissure).

Conformément à la norme ISO 13586:2000 :

- *l* doit être supérieur à 4,2*w*,
- *h* doit être inférieur à *w*/2 tout en étant supérieur à *w*/4, et
- *a* doit être inférieur ou égal à 0,55w tout en étant supérieur ou égal à 0,45*w*.

Pour les présents essais, on choisit $a$ = 5 mm + ε où ε est la longueur de la préfissure, $h$ = 5 mm, $w$ = 10 mm et $l$ = 56 mm.

La méthode suppose un comportement linéaire élastique des matériaux avec déformation plane à la pointe de la fissure. Il faut donc que la fissure soit suffisamment aiguë pour que les valeurs qu'elle permet d'obtenir pour les propriétés mesurées ne soient pas sensiblement plus élevées que celles qu'on obtiendrait avec une fissure encore plus aiguë.

La préfissure est réalisée à l'aide d'un appareil INSTRON™ 4400R équipé d'une cellule de force de 500 N, d'une console de pilotage INSTRON™ 8500 et d'un système informatique de traitement des données (logiciel INSTRON™ série IX). Une lame de rasoir est fixée par un mors à l'extrémité supérieure alors qu'un plateau est placé en

dessous. L'éprouvette entaillée est alignée grâce au positionnement de la lame dans l'entaille. La lame est enfoncée à une vitesse de 1 ou 5 mm/min jusqu'à une profondeur de 0,15 à 0,4 mm maximum. Les conditions de déplacement de la lame de rasoir sont préalablement définies. Selon la norme, l'augmentation de la longueur de la fissure ainsi obtenue doit être supérieure à 4 fois le rayon original de la pointe de l'entaille.

Les essais sont effectués sur une machine d'essai INSTRON™ 4400R équipée d'une cellule de force de 10kN, d'une console de pilotage INSTRON™ 8500 et d'un système informatique de traitement des données (logiciel INSTRON™ série IX).

La figure 2 illustre schématiquement le montage comportant deux rouleaux et un capteur de déplacement tel qu'utilisé sur la machine d'essai INSTRON™ 4400R, vu de dessus (partie A) et vu en coupe transversale (partie B).

Dans cette figure :

- *L* représente la portée,
- *R* représente le rayon,
- *h* représente l'épaisseur, tandis que
- *l* représente la distance contrôlée par le capteur de déplacement.

*L* doit être égal à 4*w* ± 0,1*w*, tandis que *R* doit être inférieur à *w*/2 et supérieur à *w*/8.

Dans le cadre des présents tests, la portée est de 40 mm et le rayon des rouleaux est de 5 mm.

Le facteur d'intensité de contrainte critique $K_{IC}$ (noté $K_Q$ pour l'instant) est calculé par la formule suivants :

$$K_Q = \frac{f(a/w) \times F_Q}{h \times \sqrt{w}}$$

dans laquelle :

- $F_Q$ est la charge au début de la propagation de la fissure (charge maximum mesurée sur la courbe donnant la charge en fonction du déplacement),
- *h* est l'épaisseur de l'éprouvette,
- *w* est la largeur de l'éprouvette,
- *f*(*a*/*w*) est le facteur d'étalonnage lié à la géométrie, fonction de la longueur a de la fissure.

$$f(x) = 6 \times x \times \frac{1,99 - x(1-x)(2,15 - 3,93x + 2,7x^2)}{(1+2x)(1-x)^{3/2}} \quad \text{avec } x = a/w$$

Les résultats des essais ne doivent être considérés comme valables que si les dimensions des éprouvettes sont nettement plus grandes que la zone plastique entourant la pointe de la fissure, caractérisée par la valeur $\bar{r}$ définie par la formule :

$$\bar{r} = \frac{K_Q^2}{\sigma_y^2}$$

dans laquelle $\sigma y$ est la contrainte au seuil d'écoulement en traction uniaxiale ou 0,7 fois la contrainte au seuil d'écoulement en compression.

Pour être considérées comme étant appropriées aux essais de rupture par déformation plane, les éprouvettes doivent satisfaire aux trois critères dimensionnels suivants :

- $h > 2,5\bar{r}$
- $a > 2,5\bar{r}$
- $(w-a) > 2,5\bar{r}$.

Etant donné les dimensions d'éprouvette proposées dans la norme, il suffit que l'un des critères ci-dessus soit satisfait pour que tous les autres le soient.

Si les différents critères sont satisfaits, alors $K_Q$ est égal à $K_{IC}$.

Température de transition vitreuse :

La température de transition vitreuse est déterminée par des analyses mécaniques dynamiques (DMA) au moyen d'un appareil TA2980 de TA Instruments, cette technique présentant, en effet, l'avantage de ne soumettre les matériaux analysés qu'à de très faibles déformations et, partant, de ne pas en modifier la structure.

Les mesures sont faites en mode flexion double encastrement en utilisant les conditions opératoires suivantes : fréquence de sollicitation : 1 Hz ; amplitude : 30 $\mu$m ; plage de températures : de -60 à 250°C avec une rampe de 5°C/min ; gaz de refroidissement : azote.

Résultats :

Le tableau 2 ci-après présente les valeurs de ténacité $K_{IC}$, exprimées en MPa.m$^{1/2}$, et les valeurs de température de transition vitreuse Tg, exprimées en °C, qui ont été obtenues par les tests décrits ci-avant pour les matériaux préparés à partir des compositions **1, 2** et **3,** ainsi que celles qui ont été obtenues, dans les mêmes conditions, pour des matériaux résultant du durcissement par ionisation sous faisceau d'électrons, à des doses de 80 kGy (1 passage de 5 kGy + 3 passages de 25 kGy), des résines SR 601E et Ebecryl™ 600 seules.

Il présente également les gains en ténacité ($\Delta K_{IC}$), exprimés en pourcentages, présentés par les matériaux préparés à partir des compositions **1, 2** et **3,** la valeur de ténacité de référence étant, pour les compositions **1** et **2,** celle du matériau résultant du durcissement de la résine SR 601E seule, et, pour le matériau **3,** celle du matériau résultant du durcissement de la résine Ebecryl™ 600 seule.

Chaque valeur de ténacité qui est présentée dans le tableau 2 correspond à la moyenne des valeurs obtenues pour 5 à 8 mesures effectuées sur des éprouvettes différentes d'un même matériau.

TABLEAU 2

| **Matériaux** | **$K_{IC}$ (MPa.m$^{1/2}$)** | **$\Delta K_{IC}$ (%)** | **Tg (°C)** |
|---|---|---|---|
| Résine SR 601E | 1 ± 0,03 | | 70 |
| Composition **1** | 2,23 ± 0,11 | 123 | 130 |
| Composition **2** | 2,32 ± 0,10 | 132 | 152 |
| Résine Ebecryl™ 600 | 0,8 ± 0,04 | | 145 |
| Composition **3** | 1,94 ± 0,06 | 142 | Non disponible |

Ce tableau montre que les matériaux conformes à l'invention ont tous une ténacité au moins égale à 1,7 MPa.m$^{1/2}$ et que, pour l'un d'entre eux, cette ténacité est même supérieure à 2 MPa.m$^{1/2}$.

A titre indicatif, la ténacité des matériaux décrits dans la référence **[4],** pourtant déjà excellente, ne dépasse pas 1,6 MPa.m$^{1/2}$.

De plus, les gains en ténacité obtenus conformément à l'invention sont nettement plus élevés que ceux obtenus dans la référence **[4]** puisqu'ils vont de 123 à 142% alors que le meilleur gain en ténacité de cette référence est de 88%.

Par ailleurs, ce tableau montre que les matériaux conformes à l'invention ont aussi une température de transition vitreuse élevée.

Leur utilisation comme matrices de matériaux composites ou comme adhésifs pour l'assemblage de pièces en matériau(x) composite(s), notamment à usage aéronautique ou spatial, est donc particulièrement intéressante.

## REFERENCES CITEES

**[1]** Brevet US 5,434,226

**[2]** Wang S. et al., Journal of Polymer Science Part B: Polymer Physics, 2000, 38, 2409-2421

**[3]** Liang, G. et al., Journal of Materials Science, 2005, 40, 2089-2091

**[4]** Demande EP 1 473 325

## Revendications

1. Procédé pour augmenter la ténacité d'un matériau obtenu par durcissement d'une composition comprenant au moins un monomère vinylester comprenant au moins deux sites réactifs de formule $-O-CO-CR=CH_2$, dans laquelle R représente un atome d'hydrogène ou un groupe méthyle, et un motif bisphénolique A et/ou un motif novolaque, lequel procédé comprend l'incorporation dans cette composition d'un polymère thermoplastique polyaromatique sulfoné, cette incorporation étant réalisée par dissolution du monomère vinylester et du polymère thermoplastique dans un diluant réactif dans lequel ils sont tous deux solubles, le diluant réactif étant un *N*-vinyl lactame.

2. Procédé selon la revendication 1, dans lequel le monomère vinylester est choisi dans le groupe constitué par les monomères vinylesters de bisphénol A, les monomères vinylesters de bisphénol A halogénés, les monomères vinylesters novolaques et les monomères vinylesters comprenant à la fois des motifs bisphénoliques A et des motifs novolaques.

3. Procédé selon la revendication 1, dans lequel le *N*-vinyl lactame est choisi dans le groupe constitué par la *N*-vinyl-2-pyrrolidone, la *N*-vinyl-2-pipéridone et le *N*-vinyl-caprolactame.

4. Procédé selon l'une quelconque des revendications précédentes, dans lequel le polymère thermoplastique est choisi dans le groupe constitué par les polysulfones, les polyéthersulfones et les polyphénylsulfones.

5. Procédé selon la revendication 4, dans lequel le polymère thermoplastique est un polyéthersulfone.

6. Procédé selon l'une quelconque des revendications précédentes, dans lequel la composition comprend pour 100 parties en masse de monomère vinylester :

   - de 14 à 400 parties en masse et, mieux encore, de 30 à 50 parties en masse de polymère thermoplastique, et
   - de 40 à 500 parties en masse et, mieux encore, de 65 à 100 parties en masse de *N*-vinyl lactame.

7. Procédé selon l'une quelconque des revendications précédentes, qui comprend :

   a) la dissolution du polymère thermoplastique dans le *N*-vinyl lactame, puis
   b) la dissolution du monomère vinylester dans la solution obtenue à l'étape a).

8. Composition durcissable, qui comprend au moins un monomère vinylester comprenant au moins deux sites réactifs de formule $-O-CO-CR=CH_2$, dans laquelle R représente un atome d'hydrogène ou un groupe méthyle, et un motif bisphénolique A et/ou un motif novolaque, un polymère thermoplastique polyaromatique sulfoné et un *N*-vinyl lactame.

9. Composition selon la revendication 8, dans laquelle le monomère vinylester est choisi dans le groupe constitué par les monomères vinylesters de bisphénol A, les monomères vinylesters de bisphénol A halogénés, les monomères vinylesters novolaques et les monomères vinylesters comprenant à la fois des motifs bis-phénoliques A et des motifs novolaques.

10. Composition selon la revendication 8 ou la revendication 9, dans laquelle le *N*-vinyl lactame est choisi dans le groupe constitué par la *N*-vinyl-2-pyrrolidone, la *N*-vinyl-2-pipéridone et le *N*-vinyl-caprolactame.

11. Composition selon l'une quelconque des revendications 8 à 10, dans laquelle le polymère thermoplastique est choisi dans le groupe constitué par les polysulfones, les polyéthersulfones et les polyphénylsulfones.

12. Composition selon la revendication 11, dans laquelle le polymère thermoplastique est un polyéthersulfone.

13. Composition selon l'une quelconque des revendications 8 à 12, qui comprend pour 100 parties en masse de monomère vinylester :

   - de 14 à 400 parties en masse et, mieux encore, de 30 à 50 parties en masse de polymère thermoplastique, et
   - de 40 à 500 parties en masse et, mieux encore, de 65 à 100 parties en masse de *N*-vinyl lactame.

14. Composition selon l'une quelconque des revendications 8 à 13, qui est une composition durcissable sous l'effet

d'un rayonnement lumineux ou ionisant.

**15.** Matériau obtenu par durcissement d'une composition durcissable selon l'une quelconque des revendications 8 à 14.

**16.** Matériau selon la revendication 15, qui présente une ténacité ($K_{IC}$) au moins égale à 1,7 MPa.$m^{1/2}$ telle que déterminée selon la norme ISO 13586:2000.

**17.** Matériau selon la revendication 15 ou la revendication 16, qui est un adhésif assurant l'assemblage de pièces entre elles, notamment de pièces en matériau(s) composite(s).

**18.** Matériau selon la revendication 15 ou la revendication 16, qui est la matrice d'un matériau composite.

**Patentansprüche**

**1.** Verfahren zur Erhöhung der Zähigkeit eines durch Härtung einer Zusammensetzung, die mindestens ein Vinylester-Monomer mit mindestens zwei reaktiven Stellen der Formel $-O-CO-CR=CH_2$, in der R für ein Wasserstoffatom oder eine Methylgruppe steht, und einer Bisphenol-A-Einheit und/oder einer Novolak-Einheit umfasst, erhaltenen Materials, wobei das Verfahren die Einarbeitung eines sulfonierten polyaromatischen thermoplastischen Polymers in diese Zusammensetzung umfasst, wobei diese Einarbeitung durch Lösen des Vinylester-Monomers und des thermoplastischen Polymers in einem reaktiven Verdünnungsmittel, in dem sie beide löslich sind, durchgeführt wird, wobei es sich bei dem reaktiven Verdünnungsmittel um ein *N*-Vinyllactam handelt.

**2.** Verfahren nach Anspruch 1, bei dem das Vinylester-Monomer aus der Gruppe bestehend aus Vinylester-Monomeren von Bisphenol A, halogenierten Vinylester-Monomeren von Bisphenol A, Novolak-Vinylester-Monomeren und Vinylester-Monomeren, die sowohl Bisphenol-A-Einheiten als auch Novolak-Einheiten umfassen, ausgewählt wird.

**3.** Verfahren nach Anspruch 1, bei dem das *N*-Vinyllactam aus der Gruppe bestehend aus *N*-Vinyl-2-pyrrolidon, *N*-Vinyl-2-piperidon und *N*-Vinylcaprolactam ausgewählt wird.

**4.** Verfahren nach einem der vorhergehenden Ansprüche, bei dem das thermoplastische Polymer aus der Gruppe bestehend aus Polysulfonen, Polyethersulfonen und Polyphenylsulfonen ausgewählt wird.

**5.** Verfahren nach Anspruch 4, bei dem es sich bei dem thermoplastischen Polymer um ein Polyethersulfon handelt.

**6.** Verfahren nach einem der vorhergehenden Ansprüche, bei dem die Zusammensetzung auf 100 Massenteile Vinylester-Monomer

- 14 bis 400 Massenteile und noch besser 30 bis 50 Massenteile thermoplastisches Polymer und
- 40 bis 500 Massenteile und noch besser 65 bis 100 Massenteile *N*-Vinyllactam

umfasst.

**7.** Verfahren nach einem der vorhergehenden Ansprüche, das Folgendes umfasst:

a) das Lösen des thermoplastischen Polymers in dem *N*-Vinyllactam, dann
b) das Lösen des Vinylester-Monomers in der in Schritt a) erhaltenen Lösung.

**8.** Härtbare Zusammensetzung, die mindestens ein Vinylester-Monomer mit mindestens zwei reaktiven Stellen der Formel $-O-CO-CR=CH_2$, in der R für ein Wasserstoffatom oder eine Methylgruppe steht, und einer Bisphenol-A-Einheit und/oder einer Novolak-Einheit, ein sulfoniertes polyaromatisches thermoplastisches Polymer und ein *N*-Vinyllactam umfasst.

**9.** Zusammensetzung nach Anspruch 8, wobei das Vinylester-Monomer aus der Gruppe bestehend aus Vinylester-Monomeren von Bisphenol A, halogenierten Vinylester-Monomeren von Bisphenol A, Novolak-Vinylester-Monomeren und Vinylester-Monomeren, die sowohl Bisphenol-A-Einheiten als auch Novolak-Einheiten umfassen, ausgewählt ist.

**10.** Zusammensetzung nach Anspruch 8 oder Anspruch 9, bei dem das *N*-Vinyllactam aus der Gruppe bestehend aus

*N*-Vinyl-2-pyrrolidon, *N*-Vinyl-2-piperidon und N-Vinylcaprolactam ausgewählt ist.

**11.** Zusammensetzung nach einem der Ansprüche 8 bis 10, wobei das thermoplastische Polymer aus der Gruppe bestehend aus Polysulfonen, Polyethersulfonen und Polyphenylsulfonen ausgewählt wird.

**12.** Zusammensetzung nach Anspruch 11, wobei es sich bei dem thermoplastischen Polymer um ein Polyethersulfon handelt.

**13.** Zusammensetzung nach einem der Ansprüche 8 bis 12, die auf 100 Massenteile Vinylester-Monomer

- 14 bis 400 Massenteile und noch besser 30 bis 50 Massenteile thermoplastisches Polymer und
- 40 bis 500 Massenteile und noch besser 65 bis 100 Massenteile *N*-Vinyllactam

umfasst.

**14.** Zusammensetzung nach einem der Ansprüche 8 bis 13, bei der es sich um eine unter Einwirkung von Lichtstrahlung oder ionisierender Strahlung härtbare Zusammensetzung handelt.

**15.** Material, erhalten durch Härtung einer härtbaren Zusammensetzung nach einem der Ansprüche 8 bis 14.

**16.** Material nach Anspruch 15, das eine Zähigkeit ($K_{IC}$) von mindestens 1,7 $MPa.m^{1/2}$ gemäß Bestimmung nach der ISO-Norm 13586:2000 aufweist.

**17.** Material nach Anspruch 15 oder Anspruch 16, bei dem es sich um einen Klebstoff handelt, der die Verbindung von Teilen miteinander, insbesondere von Teilen aus Verbundwerkstoff(en), gewährleistet.

**18.** Material nach Anspruch 15 oder Anspruch 16, bei dem es sich um die Matrix eines Verbundwerkstoffs handelt.

## Claims

**1.** Method for increasing the toughness of a material obtained by curing a composition comprising at least one vinylester monomer comprising at least two reactive sites of formula $-O-CO-CR=CH_2$, wherein R represents a hydrogen atom or a methyl group, and a bisphenol A unit and/or a novolac unit, which method comprises the incorporation into this composition of a sulfonated polyaromatic thermoplastic polymer, this incorporation being achieved by dissolving the vinylester monomer and the thermoplastic polymer in a reactive diluent in which they are both soluble, the reactive diluent being a *N*-vinyl lactam.

**2.** Method according to claim 1, wherein the vinylester monomer is selected from the group formed by bisphenol A vinylester monomers, halogenated bisphenol A vinylester monomers, novolac vinylester monomers and vinylester monomers comprising both bisphenol A units and novolac units.

**3.** Method according to claim 1, wherein the *N*-vinyl lactam is selected from the group formed by *N*-vinyl-2-pyrrolidone, *N*-vinyl-2-piperidone and *N*-vinyl-caprolactam.

**4.** Method according to any of the preceding claims, wherein the thermoplastic polymer is selected from the group formed by polysulfones, polyethersulfones and polyphenylsulfones.

**5.** Method according to claim 4, wherein the thermoplastic polymer is a polyethersulfone.

**6.** Method according to any of the preceding claims, wherein the composition comprises for 100 parts by mass of vinylester monomer:

- from 14 to 400 parts by mass and, still better, from 30 to 50 parts by mass of thermoplastic polymer, and
- from 40 to 500 parts by mass and, still better, from 65 to 100 parts by mass of *N*-vinyl lactam.

**7.** Method according to any of the preceding claims, which comprises:

a) the dissolution of the thermoplastic polymer in the *N*-vinyl lactam, and then

b) the dissolution of the vinylester monomer in the solution obtained in step a).

**8.** Curable composition, which comprises at least one vinylester monomer comprising at least two reactive sites of formula $-O-CO-CR=CH_2$, wherein R represents a hydrogen atom or a methyl group, and a bisphenol A unit and/or a novolac unit, a sulfonated polyaromatic thermoplastic polymer and a *N*-vinyl lactam.

**9.** Composition according to claim 8, wherein the vinylester monomer is selected from the group formed by bisphenol A vinylester monomers, halogenated bisphenol vinylester monomers, novolac vinylester monomers and vinylester monomers comprising both bisphenol A units and novolac units.

**10.** Composition according to claim 8 or claim 9, wherein the *N*-vinyl lactam is selected from the group formed by *N*-vinyl-2-pyrrolidone, *N*-vinyl-2-piperidone and *N*-vinyl-caprolactam.

**11.** Composition according to any of claims 8 to 10, wherein the thermoplastic polymer is selected from the group formed by polysulfones, polyethersulfones and polyphenylsulfones.

**12.** Composition according to claim 11, wherein the thermoplastic polymer is a polyethersulfone.

**13.** Composition according to any of claims 8 to 12, which comprises for 100 parts by mass of vinylester monomer:

- from 14 to 400 parts by mass and, still better, from 30 to 50 parts by mass of thermoplastic polymer, and
- from 40 to 500 parts by mass and, still better, from 65 to 100 parts by mass of *N*-vinyl lactam.

**14.** Composition according to any of claims 8 to 13, which is a composition curable under the effect of a light or ionizing radiation.

**15.** Material obtained by curing a curable composition according to any of claims 8 to 14.

**16.** Material according to claim 15, which has a toughness ($K_{IC}$) at least equal to 1.7 $MPa.m^{1/2}$ as determined according to the ISO 13586:2000 standard.

**17.** Material according to claim 15 or claim 16, which is an adhesive ensuring the assembling of parts together, notably of parts in composite material(s).

**18.** Material according to claim 15 or claim 16, which is the matrix of a composite material.

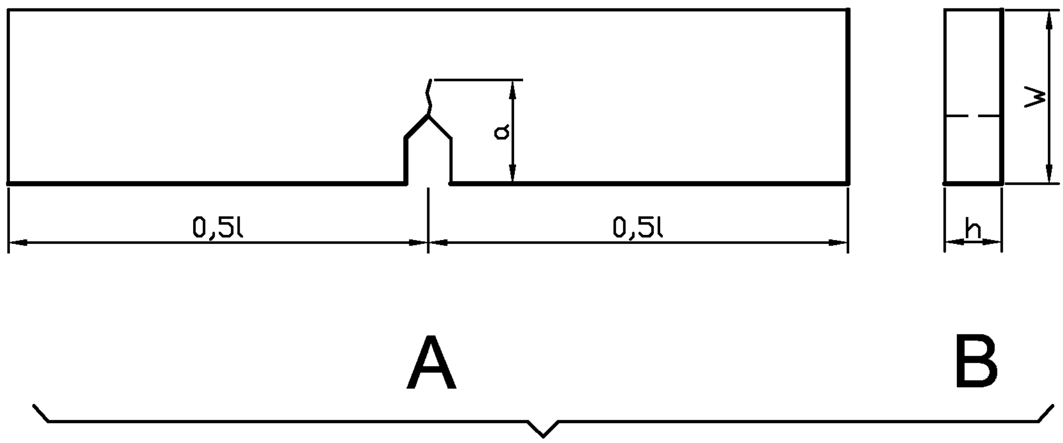


FIG. 1

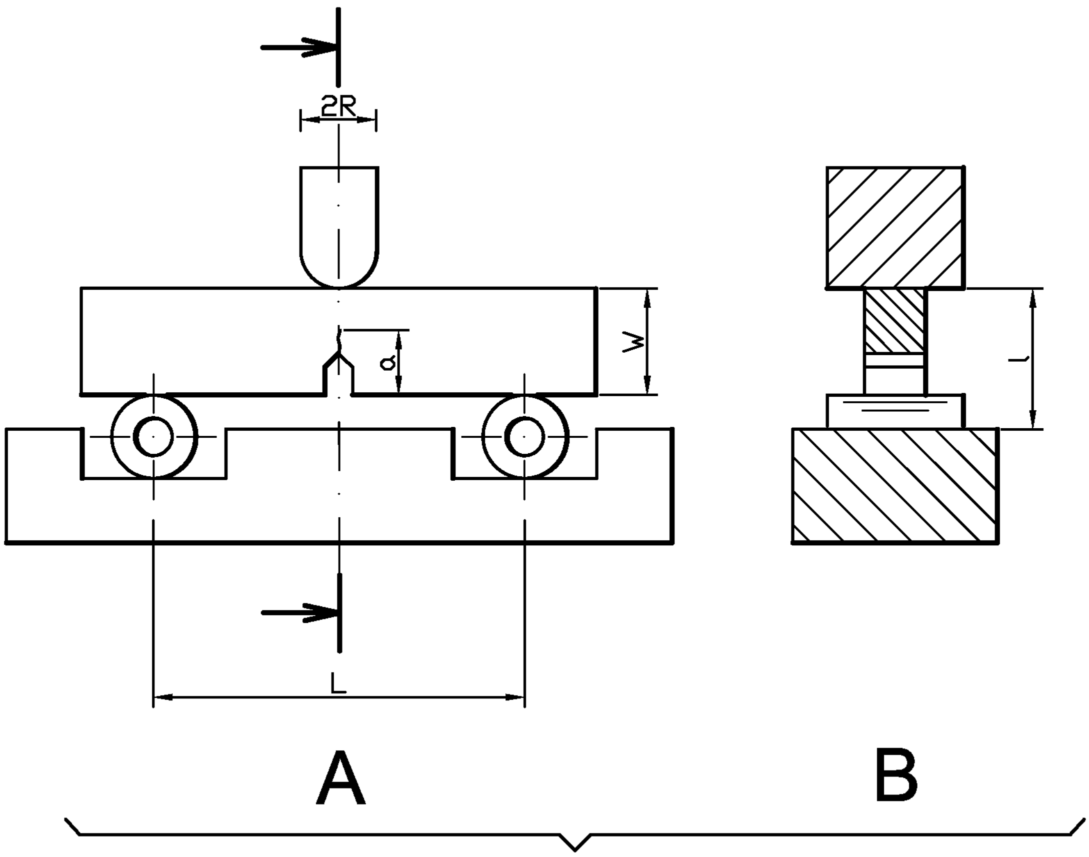


FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5434226 A
- EP 1473325 A


### Littérature non-brevet citée dans la description


- **WANG S. et al.** *Journal of Polymer Science Part B: Polymer Physics,* 2000, vol. 38, 2409-2421
- **LIANG, G. et al.** *Journal of Materials Science,* 2005, vol. 40, 2089-2091